# FASCICULE DE BREVET EUROPEEN

(11) **EP 1 809 555 B1**
(45) Date de publication et mention de la délivrance du brevet: **01.09.2010**
(21) Numéro de dépôt: 05814888.3
(22) Date de dépôt: 04.11.2005
(51) Int. Cl.: B65G 47/71

(54) **DISPOSITIF DE TRANSFERT DE CHARGES ENTRE AU MOINS DEUX CONVOYEURS OU TRANSPORTEURS**
VORRICHTUNG ZUR ÜBERTRAGUNG VON LASTEN ZWISCHEN MINDESTENS ZWEI FÖRDERBÄNDERN
DEVICE FOR TRANSFERRING LOADS BETWEEN AT LEAST TWO CONVEYORS

(30) Priorité: 09.11.2004 FR 0411931; 08.03.2005 FR 0502314
(43) Date de publication de la demande: 25.07.2007
(73) Titulaire: Sidel Participations, 76930 Octeville Sur Mer (FR)
(72) Inventeur: PETROVIC, Zmaj, F-76930 Octevill Sur Mer (FR)
(74) Mandataire: Nuss, Laurent
(86) Numéro de dépôt international: PCT/FR2005/002754
(87) Numéro de publication internationale: WO 2006/051195

(56) Documents cités:
- EP-A- 0 232 673
- DE-B- 1 025 397
- DE-B- 1 288 017
- DE-U1- 9 422 363
- FR-A- 2 684 649
- FR-A- 2 798 370
- US-A- 2 816 646
- US-A- 3 982 790

## Description

La présente invention concerne le domaine du convoyage de charges, notamment avec changement de convoyeur ou transporteur.

De nombreux domaines de l'industrie mettent couramment en oeuvre des convoyeurs ou transporteurs de charges pour transférer de telles charges sous forme de pièces ou de conteneurs entre des postes de travail ou vers des postes de stockage ou de conditionnement ou encore d'expédition.

Par ailleurs, la mise en oeuvre de ce type de convoyeur ou de transporteur peut être effectuée dans des centres de tri d'objets ou de récipients et plus particulièrement de bouteilles consignées.

Généralement, ces convoyeurs ou transporteurs de charges se présentent sous forme de tables allongées munies de rouleaux motorisés, disposés perpendiculairement à leur axe longitudinal et alignés parallèlement entre eux ou encore sous de forme de chaînes à palettes ou à courroie à bande flexible ou à courroies crantées et les charges à transporter sont simplement posées de manière à peu près centrée sur ces convoyeurs, c'est-à-dire que les convoyeurs pour transfert rectiligne se présentent actuellement sous la forme de deux chaînettes symétriques.

Pour le transfert en direction rectiligne, les charges sont disposées sensiblement suivant l'axe médian longitudinal et sont éventuellement guidées sur les convoyeurs ou transporteurs au moyen de rails latéraux. Pour effectuer des changements de direction, il est prévu des dispositifs de déviation des charges, sous forme de pièces individuelles ou de conteneurs, qui consistent en des moyens accessoires poussant lesdites charges vers le convoyeur ou transporteur en déviation ou amenant progressivement les charges sur ledit convoyeur ou transporteur en déviation.

Dans le premier cas, les dispositifs consistent essentiellement en un ensemble de poussées à vérin présentant une plaque ou analogue, actionnée par un vérin et venant latéralement en contact avec la pièce ou le conteneur à dévier et poussant ladite pièce ou conteneur sur un convoyeur ou transporteur s'étendant perpendiculairement à un premier convoyeur ou transporteur.

Dans le cas d'une déviation, suivant une direction angulaire moins accentuée, il est également possible d'utiliser des moyens à poussée latérale qui agissent successivement sur la pièce ou conteneur à dévier pour l'amener progressivement vers le convoyeur ou transporteur en déviation.

En présence de tels convoyeurs ou transporteurs en déviation, il est aussi possible de mettre en oeuvre des transporteurs intermédiaires à rouleaux motorisés, dont les différents rouleaux se joignant au transporteur en déviation ou rejoignant un transporteur principal sont de dimensions différentes pour s'adapter à l'angle de déviation entre les transporteurs.

Enfin, dans ce dernier cas, les transporteurs ou convoyeurs intermédiaires peuvent également être du type chaînes à palettes pouvant subir une déviation angulaire prédéterminée. Cependant, l'utilisation de tels transporteurs intermédiaires nécessite des aménagements spécifiques pour la liaison entre le transporteur ou convoyeur initial et le transporteur ou convoyeur en déviation.

Les dispositifs de déviation existant actuellement remplissent, certes, à peu près convenablement leurs rôles, mais sont de constitution et de fonctionnement relativement complexes, ce qui peut entraîner des problèmes de fonctionnement ayant pour conséquence des arrêts complets de l'ensemble des postes desservis par un ensemble de convoyeurs ou transporteurs et des interventions de maintenance fréquentes. En outre, la complexité de ces dispositifs de déviation entraîne des coûts d'installation relativement élevés.

Enfin, dans le cas d'un transfert de charges en direction rectiligne, il peut se poser un problème de maintien desdites charges, en particulier lorsqu'elles sont de taille relativement faible, entre deux convoyeurs ou transporteurs en prolongement, lesdites charges risquant de ne pas être correctement entraînées par le convoyeur ou transporteur en aval et de s'accumuler à la jonction entre le convoyeur en amont et le convoyeur en aval. Il peut en résulter une mauvaise disposition des charges sur le convoyeur en aval, due, par exemple, à ladite accumulation.

Par ailleurs, on connaît, par EP-A-0 232 673, un convoyeur selon le préambule de la revendication 1 comprenant un éjecteur destiné à déplacer des objets à partir d'un transporteur longitudinal vers des transporteurs latéraux, ce toutefois sans en assurer le maintien pendant la période de passage d'un transporteur vers l'autre. En effet, les produits transportés et éjectés sont entièrement en appui sur un élément transporteur.

Un tel éjecteur ne peut donc pas assurer un maintien latéral des charges en porte-à-faux pendant le transfert.

La présente invention a pour but de pallier ces inconvénients en proposant un convoyeur ou transporteur de charges permettant de réaliser un changement de convoyeur ou transporteur, en déviation ou en alignement, tout en maintenant une parfaite disposition des charges à transférer.

A cet effet, le convoyeur ou transporteur de charges selon l'invention est défini par la revendication 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
les figures 1a à 1d sont des vues en perspective représentant un mode de réalisation du dispositif conforme à l'invention ;
les figures 2 à 7 sont des vues en plan de variantes de réalisation du dispositif, sans le moyen de maintien latéral des charges, et
la figure 8 est une vue en élévation latérale et en coupe, à plus grande échelle, représentant le montage du moyen de maintien latéral des charges.

Les figures la à 1d des dessins annexés représentent, à titre d'exemple, un convoyeur ou transporteur de charges amont 1 et un convoyeur ou transporteur de charges aval 2 destinés à acheminer des charges 3 entre différents postes de travail, ces transporteurs ou convoyeurs de charges amont 1 et aval 2 étant reliés entre eux par un dispositif 4 de transfert de charges. Dans la suite de la description, les termes convoyeur amont sont utilisés pour désigner le convoyeur, par lequel les charges arrivent pour être traitées par le dispositif de transfert, et les termes convoyeur aval pour désigner le convoyeur, par lequel les charges sortent quand elles ont fini d'être traitées par le dispositif de transfert.

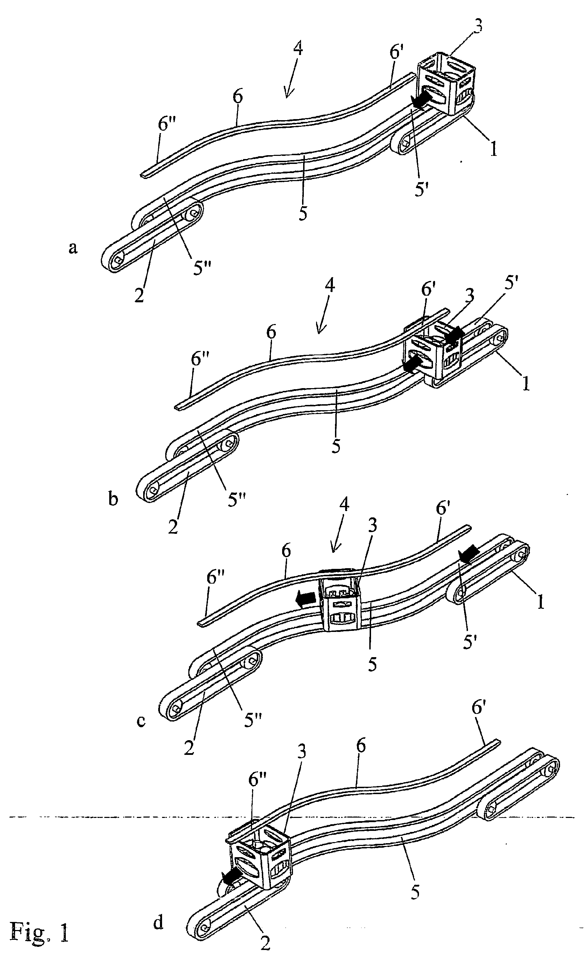

Sur les figures 1 à 7 des dessins annexés, la charge 3, qui y est représentée, est sous forme d'une caisse, par exemple de réception de bouteilles ou analogues, mais peut être constituée sous toutes autres formes, à savoir aussi bien sous forme de pièce simple, usinée ou non ou d'un ensemble de pièces assemblées. La charge 3, déplacée sur les convoyeurs ou transporteurs amont 1 et aval 2, est toujours disposée sur ces derniers de manière centrée, c'est-à-dire de manière à être parfaitement en équilibre lorsqu'elle se trouve seulement sur ces convoyeurs ou transporteurs amont 1 ou aval 2 et dépasse sur une partie de sa longueur de part et d'autre desdits convoyeurs amont 1 et aval 2.

Conformément à l'invention, le dispositif 4 de transfert de charges 3 entre au moins deux convoyeurs ou transporteurs amont 1, aval 2 est essentiellement constitué par un convoyeur ou transporteur intermédiaire 5 s'étendant, sur une partie de chacune de ses extrémités 5', 5", de manière adjacente aux convoyeurs ou transporteurs en amont 1 et en aval 2, et par un moyen 6 de maintien latéral des charges 3 en porte-à-faux pendant le transfert entre le convoyeur ou transporteur amont 1 et le convoyeur ou transporteur aval 2. Cette disposition du dispositif 4, avec les extrémités 5', 5" du convoyeur ou transporteur intermédiaire 5 adjacentes aux extrémités des convoyeurs ou transporteurs amont 1 et aval 2, c'est-à-dire avec lesdites extrémités 5', 5" chacune à côté de l'extrémité correspondante desdits convoyeurs ou transporteurs amont 1 et aval 2, permet que lesdites extrémités 5' et 5" s'étendent sous les bords correspondants des charges 3 le long des extrémités desdits convoyeurs ou transporteurs amont 1 et aval 2.

Selon une forme de réalisation de l'invention, le convoyeur ou transporteur intermédiaire 5 est avantageusement disposé à un niveau légèrement inférieur à celui des convoyeurs ou transporteurs amont 1 et aval 2 et le moyen 6 de maintien latéral des charges s'étend parallèlement au-dessus du convoyeur ou transporteur intermédiaire 5 à une distance légèrement inférieure à la hauteur des charges 3 à transférer. Ce moyen 6 de maintien latéral des charges permet d'assurer un appui du bord supérieur desdites charges contre sa face inférieure, de sorte que, lorsque lesdites charges quittent le transporteur en amont 1, elles restent maintenues en porte-à-faux sur le convoyeur ou transporteur intermédiaire 5, par pincement de leur bord correspondant, sans risquer de quitter ce dernier, du fait que le bord supérieur de la charge prend appui sur le moyen de maintien latéral 6, de façon à exercer un effort résistant, tel qu'un effet d'arc-boutement.

Il est également possible, selon une autre forme de réalisation de l'invention, non représentée aux dessins annexés, de disposer le convoyeur ou transporteur intermédiaire 5 à un niveau légèrement supérieur à celui des convoyeurs ou transporteurs amont 1 et aval 2. Par ailleurs, conformément à une autre forme de réalisation de l'invention, non représentée aux dessins annexés, le convoyeur ou transporteur intermédiaire 5 peut aussi être disposé de manière inclinée par rapport aux convoyeurs ou transporteurs amont 1 et aval 2.

De préférence, le convoyeur ou transporteur intermédiaire 5 est du type chaîne à palettes et est muni d'un revêtement à adhérence renforcée, du type revêtement rugueux et/ou élastiquement déformable et le moyen de maintien latéral se présente sous forme d'un guide, dont la face inférieure tournée vers le convoyeur ou transporteur intermédiaire 5, en contact avec le bord supérieur de la charge, est lisse et présente une faible adhérence par rapport aux matériaux de la charge.

Selon une forme de réalisation de l'invention, non représentée aux dessins annexés, les extrémités 6' et 6" du moyen de maintien latéral 6, s'étendant au-dessus des extrémités 5' et 5" du convoyeur ou transporteur intermédiaire 5, sont avantageusement sous forme de parties mobiles sur la partie centrale dudit moyen de maintien latéral 6 et actionnées par l'intermédiaire de vérins pneumatiques, hydrauliques ou électriques ou encore de cames.

Ainsi, pour réaliser l'entraînement de la charge 3 par le convoyeur ou transporteur intermédiaire 5, il suffit d'appuyer la partie inférieure du bord correspondant de la charge 3 sur l'extrémité 5' dudit convoyeur ou transporteur intermédiaire 5 par l'intermédiaire de la partie mobile 6' du moyen de maintien latéral 6 (figure 1b). Il en résulte que cette partie inférieure de bord entre en contact avec le revêtement plus adhérent du convoyeur ou transporteur intermédiaire 5 et, lorsque la charge 3 quitte l'extrémité du convoyeur ou transporteur amont 1, elle est entièrement entraînée par le convoyeur ou transporteur intermédiaire 5 et maintenue sur ce dernier par l'intermédiaire du moyen de maintien latéral 6. Le déplacement par l'intermédiaire du dispositif de transfert selon l'invention est donc un déplacement de la charge en porte-à-faux, celle-ci étant, d'une certaine manière, pincée entre le convoyeur ou transporteur intermédiaire 5 et le guide formant le moyen de maintien latéral 6 (figure 1c). A l'arrivée de la charge 3 devant le convoyeur ou transporteur aval 2 (figure 1d), lorsque ladite charge 3 est entièrement au- dessus dudit convoyeur ou transporteur aval 2, la partie mobile 6" du guidage formant le moyen de maintien latéral 6 est légèrement soulevée au moyen de son actionneur, de sorte que l'appui latéral correspondant de la charge 3 sur l'extrémité 5" du convoyeur ou transporteur intermédiaire 5 est relâché et que l'entraînement de la charge 3 n'est plus effectué que par le convoyeur ou transporteur aval 2. Ceci est dû au fait que le convoyeur ou transporteur intermédiaire 5 est disposé à un niveau légèrement inférieur à celui du convoyeur ou transporteur aval 2, de sorte que la libération de l'appui sur la charge 3 par la partie mobile 6" de l'extrémité du moyen de maintien latéral 6 a pour effet un basculement de la charge 3 sur l'extrémité du convoyeur ou transporteur aval 2, sans plus aucun contact avec le convoyeur ou transporteur intermédiaire 5. La charge 3 progresse alors sur le convoyeur ou transporteur aval 2 en direction d'un autre poste de travail ou d'un autre dispositif de transfert. Bien entendu, le fonctionnement est identique lorsque le convoyeur ou transporteur intermédiaire 5 est disposé à un niveau supérieur à celui des convoyeurs ou transporteurs amont 1 et aval 2, ou lorsqu'il est incliné par rapport à ces derniers.

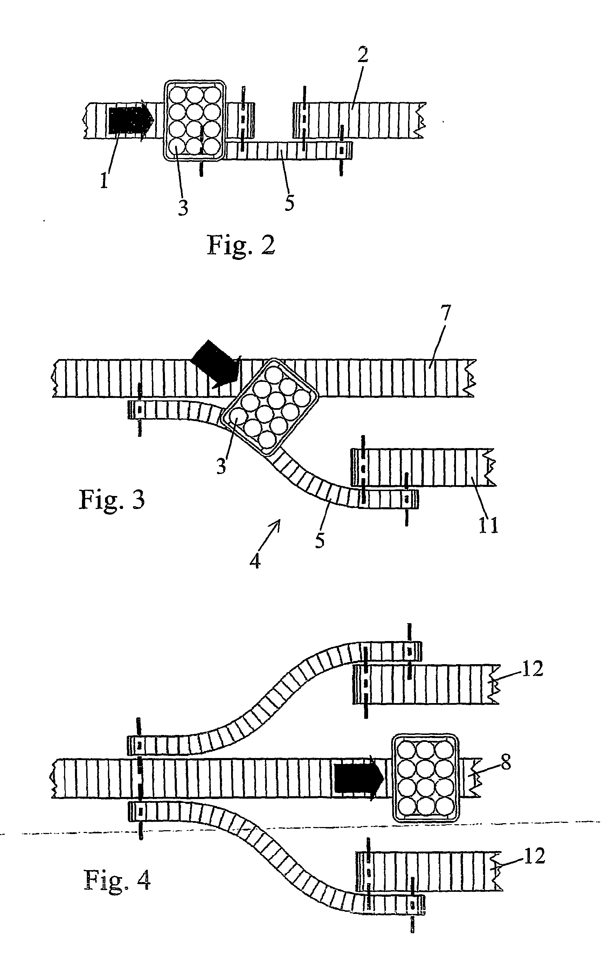

La figure 2 des dessins annexés représente une variante de réalisation de l'invention, dans laquelle le dispositif 4 de transfert de charges 3 entre deux convoyeurs ou transporteurs amont 1, aval 2 est sous forme d'un dispositif rectiligne s'étendant de manière adjacente à deux convoyeurs ou transporteurs amont 1 et aval 2 alignés entre eux. Dans un tel cas, le dispositif 4 peut être relativement court, les convoyeurs ou transporteurs amont 1 et aval 2 pouvant être très proches l'un de l'autre, c'est-à-dire que leurs extrémités opposées peuvent se situer à une distance mutuelle éventuellement inférieure à l'encombrement, vu en direction du transfert de la charge 3. Un tel mode de réalisation est particulièrement intéressant pour le transfert entre deux convoyeurs ou transporteurs alignés entre eux et effectuant le transfert de charges de relativement faibles dimensions qui nécessitent, actuellement, des moyens de transfert intermédiaires généralement non motorisés permettant le passage de l'un à l'autre par gravité, afin d'éviter tout risque de coincement des charges entre les extrémités de convoyeurs ou transporteurs ou d'accumulation de charges au niveau de la jonction entre ceux-ci.

Les figures 3 à 7 des dessins annexés représentent différentes variantes de réalisation de l'invention, dans lesquelles le dispositif 4 de - transfert de charges 3 entre deux convoyeurs ou transporteurs amont 1, aval-2 est sous forme d'un dispositif présentant une ou plusieurs sections curvilignes se raccordant par des extrémités droites, de manière adjacente, à des convoyeurs ou transporteurs amont 7 à 10 et à des convoyeurs ou transporteurs aval 11 à 14.

Le principe de fonctionnement des différents dispositifs de transfert de charge représentés aux figures 2 à 7 est identique à celui décrit à propos des figures 1a à 1d. Sur les figures 2 à 7, cependant, le moyen de maintien latéral 6 n'est pas représenté, ce afin de permettre une meilleure compréhension du parcours de la charge 3.

Dans le mode de réalisation selon la figure 2, la charge 3 amenée sur le convoyeur ou transporteur amont 1 subit, au moment où elle arrive au-dessus du convoyeur ou transporteur intermédiaire 5 du dispositif 4 de transfert de charges, un appui sur son bord supérieur, du côté du dispositif 4, et est ainsi mise en contact par le bord inférieur correspondant avec le convoyeur ou transporteur intermédiaire 5. Jusqu'à la sortie de la charge 3 du convoyeur ou transporteur amont 1, cette dernière repose simultanément partiellement sur ledit convoyeur ou transporteur amont 1. A l'arrivée à la sortie de ce dernier, la charge 3 ne repose plus sur celui-ci et est entièrement maintenue par son bord correspondant entre le moyen de maintien latéral 6 et le convoyeur ou transporteur intermédiaire 5, le reste de la charge 3 étant en porte-à-faux au-dessus du vide entre le convoyeur ou transporteur amont 1 et le convoyeur ou transporteur aval 2. La reprise de la charge 3 par ce dernier s'effectue de la manière décrite à propos des figures 1a à 1d.

La figure 3 représente une variante de réalisation de l'invention, dans laquelle le dispositif 4 est constitué sous forme d'un élément présentant deux sections curvilignes de courbures opposées permettant de réaliser la déviation d'une charge 3 d'un convoyeur ou transporteur amont 7 vers un convoyeur ou transporteur aval 11, les deux convoyeurs ou transporteurs étant parallèles entre eux. Dans ce mode de réalisation, l'entrée de la charge 3 dans la zone de liaison entre le dispositif 4 et le convoyeur ou transporteur amont 7 a pour effet, si le moyen de maintien latéral 6 a été rendu opérant de la manière décrite à propos des figures 1a à 1d, c'est-à-dire a été mis en appui par son extrémité correspondante sur le bord correspondant de la charge 3, de provoquer l'entraînement de la charge 3 par le dispositif 4 de transfert de charge, de sorte que ladite charge 3 est déviée de son parcours sur le convoyeur ou transporteur amont 7 pour être amenée dans une position de transfert sur le convoyeur ou transporteur aval 11.

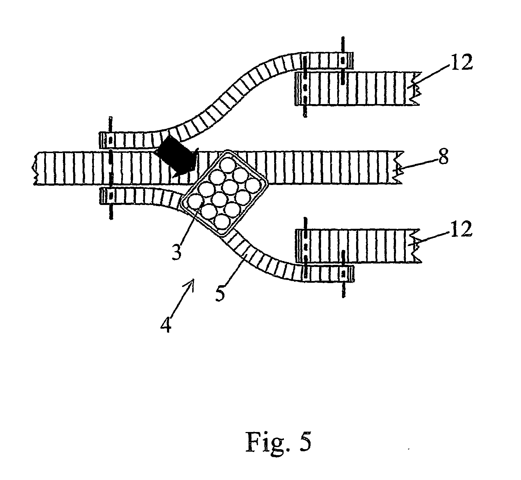

Les figures 4 et 5 représentent une configuration de convoyeurs ou transporteurs amont 8 et aval 12, dans laquelle un convoyeur amont central 8 est dévié vers deux convoyeurs aval 12 par l'intermédiaire de deux dispositifs 4 comparables à celui représenté à la figure 3 des dessins annexés. Dans ce mode de réalisation, le convoyeur amont central 8 est lui-même destiné à réaliser un transfert partiel vers l'aval. Ainsi, la figure 4 représente le fonctionnement du dispositif conforme à l'invention pour un transfert de la charge de manière rectiligne sur le convoyeur amont central 8, alors que la figure 5 représente une déviation de la charge 3 vers l'un des convoyeurs aval 12 par l'intermédiaire du dispositif 4 selon l'invention. Pour ce qui concerne les figures 4 et 5, la reprise de la charge s'effectue de la même manière que celle décrite à propos de la figure 3.

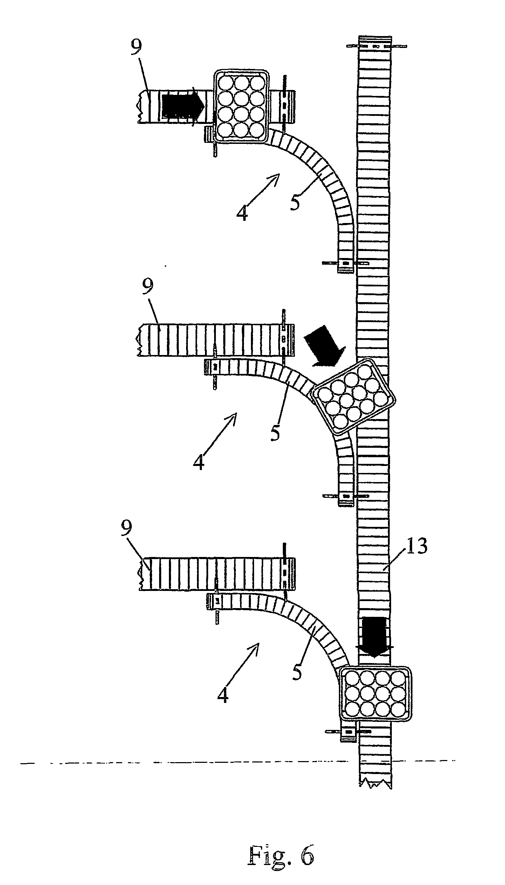

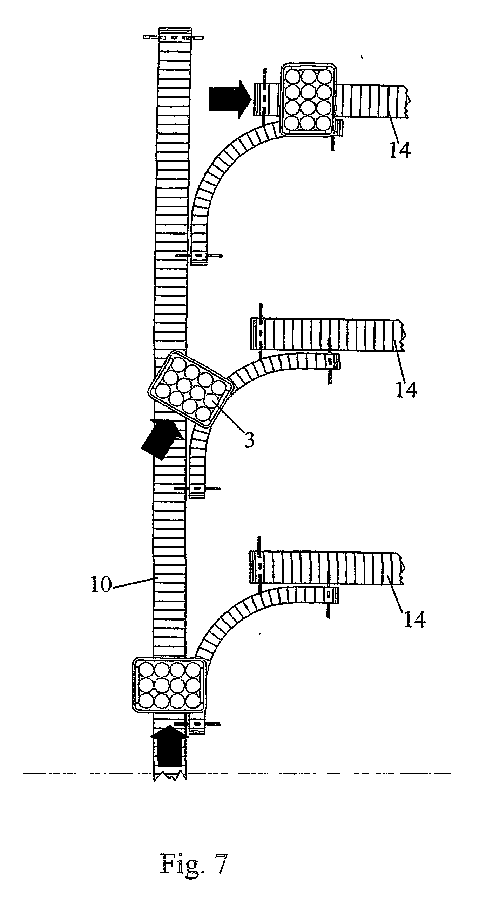

Les figures 6 et 7 représentent l'application du dispositif conforme à l'invention, en forme d'un simple élément courbe, d'une part, au transfert de charges provenant de plusieurs convoyeurs ou transporteurs amont 9 vers un seul convoyeur ou transporteur aval 13, les convoyeurs ou transporteurs intermédiaire 5 formant les dispositifs 4 de transfert de charges, étant raccordés de manière adjacente auxdits convoyeurs ou transporteurs amont 9 et aval 13 par l'intermédiaire de leurs extrémités droites (figure 6) et, d'autre part, au transfert de charges provenant d'un transporteur ou convoyeur amont unique 10 vers plusieurs convoyeurs ou transporteurs aval 14 (figure 7). Dans ce mode de réalisation, le raccordement des convoyeurs ou transporteurs intermédiaire 5 formant les dispositifs 4 de transfert de charges est réalisé de manière identique à celle selon la figure 6.

L'application du dispositif conforme à l'invention a des réalisations telles que celles représentées aux figures 6 et 7 permet d'effectuer un regroupage ou un tri de charges 3 suivant des critères prédéterminés, alors que les réalisations selon les figures 3 à 5 sont plus particulièrement destinées à effectuer une répartition de charges 3 vers des postes de travail ultérieurs prédéterminés.

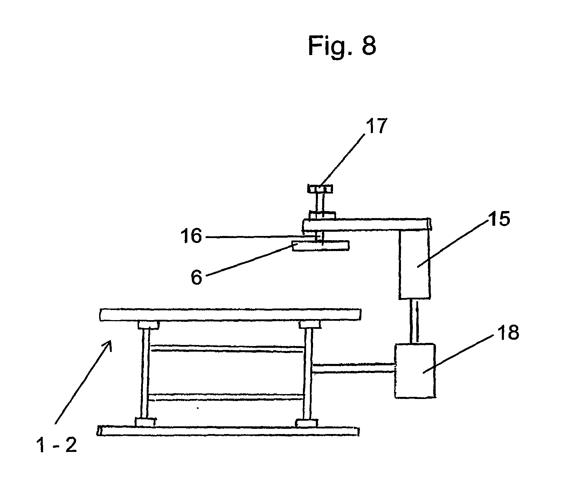

Conformément à une autre forme de réalisation de l'invention, et comme le montre la figure 8 des dessins annexés le moyen 6 de maintien latéral des charges 3, constitutif du dispositif 4 de transfert de charges 3 entre au moins deux convoyeurs ou transporteurs amont 1 et aval 2, est avantageusement fixé sur le châssis d'au moins un convoyeur ou transporteur amont 1et/ou aval 2 par l'intermédiaire de supports 15, sur lesquels il est monté avec interposition de moyens à déformation élastique contrôlée 16, tels que des ressorts réglables 16 par vis 17. Il en résulte la possibilité de prérégler la force d'application du moyen 6 de maintien latéral des charges 3, de manière à assurer en toutes circonstances un bon maintien desdites charges 3 entre ledit moyen 6 et le convoyeur ou transporteur intermédiaire 5, en prenant notamment en compte les variations possibles de largeur des charges 3.

En outre, pour tenir compte des variations de hauteur des charges 3, en fonction de la nature desdites charges 3, c'est-à-dire lorsque des séries différentes de charges 3 sont transférées avec les convoyeurs ou transporteurs amont 1 et aval 2, les supports 15 du moyen 6 de maintien latéral des charges 3 sont fixés sur le châssis d'au moins un convoyeur ou transporteur amont 1et/ou aval 2 de manière réglable par coulissement et serrage des supports 15 dans des manchons de guidage correspondants (non représentés) ou par disposition desdits supports 15 sur des vérins de positionnement 18 solidaires du châssis du ou des convoyeurs ou transporteurs amont 1et/ou aval 2. Ainsi, le moyen 6 peut être réglé en position de service avant chaque changement de série de charges 3 à transférer, de manière manuelle ou automatique, par l'intermédiaire des vérins 18, qui peuvent alors être asservis à une unité de commande centrale.

Grâce à l'invention, il est possible de réaliser un dispositif de transfert de charges de tous types, entre des moyens de transport alimentant différents postes de travail, ce en mettant en oeuvre des moyens de constitution particulièrement simple, d'un faible prix de revient et d'une grande fiabilité. Il en résulte que le dispositif conforme à l'invention offre une solution extrêmement simple aux problèmes de transfert par rapport aux dispositifs existants à ce jour. En particulier, l'invention trouve une application très intéressante dans le domaine du transfert de conteneurs, notamment de bouteilles en amont et/ou en aval de poste de préparation et/ou de remplissage de bouteilles ou analogues, ainsi qu'en matière de tri.

En outre, du fait de la simplicité de ce dispositif, les coûts de fabrication, ainsi que les opérations d'entretien des moyens de convoyages ou de transport de charges sont considérablement réduits. Il en est de même en-ce qui concerne le nombre de pièces en mouvement, les pièces d'usure, l'encombrement des équipements et la complexité des équipements liés à l'automatisation.

Ainsi, l'invention permet d'améliorer la fiabilité de fonctionnement des équipements de ce type tout en permettant la réalisation d'un grand nombre de types de liaison entre convoyeurs ou transporteurs.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Convoyeur ou transporteur de charges destiné à acheminer des charges entre différents postes de travail comprenant un convoyeur ou transporteur de charges amont (1), un convoyeur ou transporteur de charges aval (2) et un dispositif (4) de transfert de charges entre les convoyeurs ou transporteurs de charges amont (1) et aval (2), le dispositif (4) de transfert de charges étant essentiellement constitué par un convoyeur ou transporteur intermédiaire (5) s'étendant, sur une partie de chacune de ses extrémités (5', 5"), de manière adjacente aux convoyeurs ou transporteurs en amont (1) et en aval (2), et par un moyen (6) de maintien latéral des charges (3), **caractérisé en ce que** le moyen (6) de maintien latéral des charges (3) se présente sous forme d'un guide, s'étendant parallèlement au-dessus du convoyeur ou transporteur intermédiaire (5) et permettant d'assurer un appui du bord supérieur desdites charges contre sa face inférieure, de sorte que, lorsque lesdites charges (3) quittent le convoyeur ou transporteur en amont (1), elle restent maintenues en porte-à-faux sur le convoyeur ou transporteur intermédiaire (5), par pincement de leur bord correspondant, sans risquer de quitter ce dernier, du fait que le bord supérieur de la charge (3) prend appui sur le guide.

2. Convoyeur ou transporteur de charges, suivant la revendication 1, **caractérisé en ce que** le convoyeur ou transporteur intermédiaire (5) est disposé à un niveau légèrement inférieur à celui des convoyeurs ou transporteurs amont (1) et aval (2) et le moyen (6) de maintien latéral des charges s'étend parallèlement au-dessus du convoyeur ou transporteur (5) à une distance légèrement inférieure à la hauteur des charges (3) à transférer.

3. Convoyeur ou transporteur de charges, suivant la revendication 1, **caractérisé en ce que** le convoyeur ou transporteur intermédiaire (5) est disposé à un niveau légèrement supérieur à celui des convoyeurs ou transporteurs amont (1) et aval (2).

4. Convoyeur ou transporteur de charges, suivant la revendication 1, **caractérisé en ce que** le convoyeur ou transporteur intermédiaire (5) est disposé de manière inclinée par rapport aux convoyeurs ou transporteurs amont (1) et aval (2).

5. Convoyeur ou transporteur de charges, suivant l'une quelconque des revendications 1 à 4, **caractérisé en ce que** le convoyeur ou transporteur intermédiaire (5) est du type chaîne à palettes et est muni d'un revêtement à adhérence renforcée, du type revêtement rugueux et/ou élastiquement déformable et la face inférieure du guide est lisse et présente une faible adhérence.

6. Convoyeur ou transporteur de charges, suivant l'une quelconque des revendications 1 à 5, **caractérisé en ce que** les extrémités (6' et 6") du moyen de maintien latéral (6), s'étendant au-dessus des extrémités (5' et 5") du convoyeur ou transporteur intermédiaire (5), sont sous forme de parties mobiles sur la partie centrale dudit moyen de maintien latéral (6) et actionnées par l'intermédiaire de vérins pneumatiques, hydrauliques ou électriques ou encore de cames.

7. Convoyeur ou transporteur de charges, suivant l'une quelconque des revendications 1 à 6, **caractérisé en ce que** le dispositif (4) de transfert de charges est sous forme d'un dispositif rectiligne s'étendant de manière adjacente aux deux convoyeurs ou transporteur amont (1) et aval (2) alignés entre eux.

8. Convoyeur ou transporteur de charges, suivant l'une quelconque des revendications 1 à 6, **caractérisé en ce que** le dispositif (4) de transfert de charges est sous forme d'un dispositif présentant une ou plusieurs sections curvilignes se raccordant par des extrémités droites, de manière adjacente, à des convoyeurs ou transporteurs amont (7 à 10) et à des convoyeurs ou transporteurs aval (11 à 14).

9. Convoyeur ou transporteur de charges, suivant l'une quelconque des revendications 1 à 6, **caractérisé en ce que** le moyen (6) de maintien latéral des charges (3), constitutif du dispositif (4) de transfert de charges (3) entre au moins deux convoyeurs ou transporteurs amont (1) et aval (2), est fixé sur le châssis d'au moins un convoyeur ou transporteur amont (1) et/ou aval (2) par l'intermédiaire de supports (15), sur lesquels il est monté avec interposition de moyens à déformation élastique contrôlée (16), tels que des ressorts réglables (16) par vis (17).

10. Convoyeur ou transporteur de charges, suivant la revendication 9, **caractérisé en ce que** les supports (15) du moyen (6) de maintien latéral des charges (3) sont fixés sur le châssis d'au moins un convoyeur ou transporteur amont (1) et/ou aval (2) de manière réglable par coulissement et serrage des supports (15) dans des manchons de guidage correspondants.

11. Convoyeur ou transporteur de charges, suivant la revendication 9, **caractérisé en ce que** les supports (15) du moyen (6) de maintien latéral des charges (3) sont fixés sur le châssis d'au moins un convoyeur ou transporteur amont (1) et/ou aval (2) de manière réglable par disposition desdits supports (15) sur des vérins de positionnement (18) solidaires du châssis du ou des convoyeurs ou transporteurs amont (1) et/ou aval (2).

## Claims

1. Load conveyor or transporter for routing loads between different workstations comprising an upstream load conveyor or transporter (1) and a downstream load conveyor or transporter (2) and a device (4) for transferring loads between the upstream (1) and downstream (2) load conveyors or transporters, the device (4) for transferring loads being formed substantially by an intermediate conveyor or transporter (5) which extends over one part of each of its ends (5', 5") in an adjacent manner to the upstream (1) and downstream (2) conveyors or transporters, and by a lateral holding means (6) of the loads (3), **characterised in that** the lateral holding means (6) of the loads (3) is in the form of a guide extending parallel above the intermediate conveyor or transporter (5) and makes it possible to ensure the bearing of the upper edge of said loads against its lower face such that when said loads (3) leave the upstream conveyor or transporter (1), they remain supported cantilevered on the intermediate conveyor or transporter (5) by pinching their corresponding edge, without any risk of leaving the latter owing to the fact that the upper edge of the load (3) bears on the guide.

2. Load conveyor or transporter according to claim 1, **characterised in that** the intermediate conveyor or transporter (5) is placed at a level that is slightly lower than that of the upstream conveyors or transporters (1) and downstream conveyors or transporters (2) and the means (6) for laterally holding the loads extends in parallel above the conveyor or transporter (5) at a distance that is slightly lower than the height of the loads (3) to be transferred.

3. Load conveyor or transporter according to claim 1, **characterised in that** the intermediate conveyor or transporter (5) is placed at a level that is slightly higher than that of the upstream conveyor or transporter (1) and downstream conveyor or transporter (2).

4. Load conveyor or transporter according to claim 1, **characterised in that** the intermediate conveyor or transporter (5) is placed in an inclined manner relative to the upstream conveyor or transporter (1) and downstream conveyor or transporter (2).

5. Load conveyor or transporter according to any one of claims 1 to 4, **characterised in that** the intermediate conveyor or transporter (5) is of the plate chain type and is equipped with a reinforced adhesion coating, of the rough and/or elastically deformable coating type, and the lower face of the guide is smooth and has a low adhesion.

6. Load conveyor or transporter according to any one of claims 1 to 5, **characterised in that** the ends (6' and 6") of the lateral holding means (6), extending above ends (5' and 5") of the intermediate conveyor or transporter (5), are in the form of moving parts on the central portion of said lateral holding means (6) and are actuated via pneumatic jacks, hydraulic jacks or electric jacks or even cams.

7. Load conveyor or transporter according to any one of claims 1 to 6, **characterised in that** the device (4) for transferring loads is in the form of a rectilinear device that extends in an adjacent manner to two upstream conveyors or transporters (1) and downstream conveyors or transporters (2) that are aligned with one another.

8. Load conveyor or transporter according to any one of claims 1 to 6, **characterised in that** the device (4) for transferring load is in the form of a device that has one or more curvilinear sections that are connected by straight ends, in an adjacent manner, to upstream conveyors or transporters (7 to 10) and to downstream conveyors or transporters (11 to 14).

9. Load conveyor or transporter according to any one of claims 1 to 6, **characterised in that** the lateral holding means (6) of loads (3), constituent of the device (4) for transfer of loads (3) between at least two upstream conveyors or transporters (1) and downstream conveyors or transporters (2), is fixed on the chassis of at least one upstream conveyor or transporter (1) and/or downstream conveyor or transporter (2) via supports (15), on which it is mounted with the interposition of controlled elastic deformation means (16), such as springs (16) that can be adjusted by screws (17).

10. Load conveyor or transporter according to claim 9, **characterised in that** the supports (15) of the lateral holding means (6) of the loads (3) are fixed to the chassis of at least one upstream conveyor or transporter (1) and/or downstream conveyor or transporter (2) in such a way that it can be adjusted by sliding and clamping supports (15) in corresponding guiding sleeves.

11. Load conveyor or transporter, according to claim 9, **characterised in that** the supports (15) of the lateral holding means (6) of the loads (3) are fixed to the chassis of at least one upstream conveyor or transporter (1) and/or downstream conveyor or transporter (2) in an adjustable manner by arrangement of said supports (15) on positioning jacks (18) that are integral with the chassis of the upstream conveyor(s) or transporter(s) (1) and/or downstream conveyor(s) or transporter(s) (2).

## Patentansprüche

1. Förder- oder Transporteinrichtung für Lasten zur Beförderung von Lasten zwischen verschiedenen Arbeitsstationen, die Folgendes umfasst: eine aufwärts gerichtete Förder- oder Transporteinrichtung (1) für Lasten, eine abwärts gerichtete Förder- oder Transporteinrichtung (2) für Lasten und eine Vorrichtung (4) zur Übertragung von Lasten zwischen der aufwärts gerichteten Förder- oder Transporteinrichtung (1) für Lasten und der abwärts gerichteten Förder- oder Transporteinrichtung (2) für Lasten, die Vorrichtung (4) zur Übertragung von Lasten besteht im Wesentlichen aus einem Zwischenförderer (5), der sich mit einem Teil seiner Endbereiche (5', 5") angrenzend an die aufwärts gerichtete Förder- oder Transporteinrichtung (1) und die abwärts gerichtete Förder- oder Transporteinrichtung (2) erstreckt und aus einem Mittel (6) zur lateralen Stabilisierung der Lasten (3),
**dadurch gekennzeichnet, dass**
das Mittel (6) zur lateralen Stabilisierung der Lasten (3) als Führung eingesetzt wird, die sich parallel über dem Zwischenförderer (5) erstreckt und eine Abstützung der oberen Kante der Lasten gegen die untere Seite gewährleistet, derart dass die Lasten (3) senkrecht auf dem Zwischenförderer (5) durch Einklemmung der entsprechenden Kanten gehalten werden, wenn diese die aufwärts gerichtete Förder- oder Transporteinrichtung (1) verlassen, ohne dass diese den Zwischenförderer (5) verlassen, da die obere Kante der Last (3) auf der Führung gestützt wird.

2. Förder- oder Transporteinrichtung für Lasten nach Anspruch 1,
**dadurch gekennzeichnet, dass**
der Zwischenförderer (5) auf einer Ebene angeordnet ist, die sich leicht unterhalb der Ebene der aufwärts gerichteten Förder- oder Transporteinrichtung (1) und abwärts gerichteten Förder- oder Transporteinrichtung (2) befindet und sich das Mittel (6) zur lateralen Stabilisierung der Lasten parallel über dem Förderer (5), leicht unterhalb der Höhe der zu übertragenden Lasten (3) erstreckt.

3. Förder- oder Transporteinrichtung für Lasten nach Anspruch 1,
**dadurch gekennzeichnet, dass**
der Zwischenförderer (5) auf einer Ebene angeordnet ist, die leicht oberhalb der Ebene der aufwärts gerichteten Förder- oder Transporteinrichtung (1) und abwärts gerichteten Förder- oder Transporteinrichtung (2) liegt.

4. Förder- oder Transporteinrichtung für Lasten nach Anspruch 1,
**dadurch gekennzeichnet, dass**
der Zwischenförderer (5) mit einer Neigung im Bezug auf die aufwärts gerichtete Förder- oder Transporteinrichtung (1) und abwärts gerichtete Förder- oder Transporteinrichtung (2) angeordnet ist.

5. Förder- oder Transporteinrichtung für Lasten nach einem der Ansprüche 1-4,
**dadurch gekennzeichnet, dass**
der Zwischenförderer (5) nach Art einer Plattenkette ausgebildet ist und mit einer Beschichtung mit verstärkter Haftung ausgestattet ist, nach Art einer rauen Beschichtung und/oder elastisch verformbaren Beschichtung und die untere Seite der Führung glatt ist und eine geringe Haftung aufweist.

6. Förder- oder Transporteinrichtung für Lasten nach einem der Ansprüche 1-5,
**dadurch gekennzeichnet, dass**
die Endbereiche (6', 6") des Mittels (6) zur lateralen Stabilisierung, die sich oberhalb der Endbereiche (5', 5") des Zwischenförderers (5) erstrecken, in dem zentralen Bereich des Mittels (6) zur lateralen Stabilisierung in Form von beweglichen Teilen ausgebildet sind und mittels Pneumatikzylinder, Hydraulikzylinder oder Elektrozylinder oder außerdem Nocken betätigt werden.

7. Förder- oder Transporteinrichtung für Lasten nach einem der Ansprüche 1 - 6,
**dadurch gekennzeichnet, dass**
es sich bei der Vorrichtung (4) zur Übertragung von Lasten um eine geradlinige Vorrichtung handelt, die sich angrenzend an die aufwärts gerichtete (1) und abwärts gerichtete (2) Förder- oder Transporteinrichtungen erstrecken und zwischen diesen ausgerichtet ist.

8. Förder- oder Transporteinrichtung für Lasten nach einem der Ansprüche 1-6,
**dadurch gekennzeichnet, dass**
es sich bei der Vorrichtung (4) zur Übertragung von Lasten um eine Vorrichtung handelt, die eine oder mehrere gekrümmte Abschnitte aufweist, die sich an geradlinige Endbereiche der aufwärts gerichteten Förder- oder Transporteinrichtungen (7-10) und abwärts gerichteten Förder- oder Transporteinrichtungen (11-14) angrenzend anschließen.

9. Förder- oder Transporteinrichtung für Lasten nach einem der Ansprüche 1-6,
**dadurch gekennzeichnet, dass**
das Mittel (6) zur lateralen Stabilisierung der Lasten (3), das Bestandteil der Vorrichtung (4) zur Übertragung von Lasten (3) zwischen wenigstens einer aufwärts gerichteten Förder- oder Transporteinrichtung (1) und einer abwärts gerichteten Förder- oder Transporteinrichtung (2) ist, auf dem Chassis wenigstens einer aufwärts gerichteten Förder- oder Transporteinrichtung (1) und/oder einer abwärts gerichteten Förder- oder Transporteinrichtung (2) mittels Halter (15) befestigt ist, auf welchen mit Zwischenanordnung kontrolliert elastische Verformungsmittel (16) montiert sind, wie zum Beispiel durch Schrauben (17) verstellbare Federn (16).

10. Förder- oder Transporteinrichtung für Lasten nach Anspruch 9,
**dadurch gekennzeichnet, dass**
die Halter (15) des Mittels (6) zur lateralen Stabilisierung der Lasten (3) verstellbar durch Verschieben und Klemmen der Halter (15) in den jeweiligen Führungsbuchsen auf dem Chassis wenigstens einer aufwärts gerichteten Förder- oder Transporteinrichtung (1) und/oder abwärts gerichteten Förder-oder Transporteinrichtung (2) montiert sind.

11. Förder- oder Transporteinrichtung für Lasten nach Anspruch 9,
**dadurch gekennzeichnet, dass**
die Halter (15) des Mittels (6) zur lateralen Stabilisierung der Lasten (3) auf dem Chassis wenigstens einer aufwärts gerichteten Förder- oder Transporteinrichtung (1) und/oder abwärts gerichteten Förder- oder Transporteinrichtung (2) verstellbar befestigt sind, durch die Anordnung der Halter (15) auf Verstellzylindern (18), die mit dem Chassis der aufwärts (1) und/oder abwärts (2) gerichteten Förder- oder Transporteinrichtung(en) verbunden sind.
